# EUROPÄISCHE PATENTSCHRIFT

(11) **EP 4 013 576 B1**
(45) Veröffentlichungstag und Bekanntmachung des Hinweises auf die Patenterteilung: **27.11.2024**
(21) Anmeldenummer: 20765204.1
(22) Anmeldetag: 11.08.2020
(51) Int. Cl.: B25J 9/16, B25J 13/08

(54) **VERFAHREN ZUM BETREIBEN EINES ROBOTERMANIPULATORS MIT ERHÖHTER MASSE EINER LAST**
METHOD FOR OPERATING A ROBOT MANIPULATOR WITH INCREASED MASS OF A LOAD
PROCÉDÉ DE FONCTIONNEMENT D'UN MANIPULATEUR ROBOTIQUE POURVU D'UNE CHARGE DE MASSE ACCRUE

(30) Priorität: 12.08.2019 DE 102019121628
(43) Veröffentlichungstag der Anmeldung: 22.06.2022
(73) Patentinhaber: Franka Emika GmbH, 80797 München (DE)
(72) Erfinder: SPENNINGER, Andreas, 85757 Karlsfeld (DE); SABAGHIAN, Mohamadreza, 81479 München (DE)
(74) Vertreter: Cohausz & Florack
(86) Internationale Anmeldenummer: PCT/EP2020/072453
(87) Internationale Veröffentlichungsnummer: WO 2021/028413

(56) Entgegenhaltungen:
- EP-A1- 2 072 195
- EP-A1- 2 292 388
- DE-B3- 102017 102 621
- US-A1- 2018 286 741

## Beschreibung

Die Erfindung betrifft ein Verfahren zum Betreiben eines Robotermanipulators, sowie ein Robotersystem aufweisend einen Robotermanipulator mit einem Endeffektor und eine Steuereinheit zum Ausführen des Verfahrens.

Die EP 2 292 388 A1 betrifft ein Verfahren zum Stillsetzen eines Manipulators, insbesondere eines Roboters, mit den Schritten: Überwachen eines Bereichs und Bremsen des Manipulators bei einer Bereichsverletzung. Der überwachte Bereich wird während des Betriebs auf Basis eines Bremsweges des Manipulators variabel vorgegeben.

Die DE 10 2017 102 621 B3 betrifft einen Roboter mit einem beweglichen, mittels Aktoren angetriebenen Manipulator, mit einer ersten Einheit zur Ermittlung von auf den Manipulator einwirkenden externen Kräften und/oder externen Momenten, und einer zweiten Einheit zur Steuerung und Regelung der Aktoren abhängig von den ermittelten auf den Manipulator extern einwirkenden Kräften und/oder externen Momenten, wobei die zweite Einheit dazu ausgeführt ist, für einen vorgegebenen Teilraum eines Arbeitsraums des Manipulators die Aktoren derart zu steuern bzw. zu regeln, dass der Manipulator bei Einwirken einer ermittelten externen Kraft und/oder eines ermittelten externen Moments auf den Manipulator entlang von verschiedenen Projektionen verfahren wird.

Die folgenden Informationen dagegen gehören nicht notwendigerweise zu einem bestimmten Stand der Technik, sondern ergeben sich durch fachmännische Überlegungen zur Mechanik von Robotermanipulatoren. Eine zusätzliche Masse einer Last an einem Endeffektor eines Robotermanipulators erzeugt ein Moment, das auf die Basis des Robotermanipulators und im Allgemeinen auf die Gelenke des Robotermanipulators wirkt. Ist die Masse dieser Last sehr groß im Vergleich zur mechanischen Auslegung des Robotermanipulators, kann die Zuggrenze oder Fließgrenze von Materialien in den Gliedern oder an den Gelenken, insbesondere einem Getriebe oder einem Drehmomentsensor, des Robotermanipulators irgendwann erreicht sein. Daher ist es naheliegend, eine höchstzulässige Masse für die Last am Endeffektor zu definieren. Diese schränkt jedoch den Betrieb des Robotermanipulators auf die Handhabung eben dieser höchstzulässigen Masse der Last ein. Es ist daher Aufgabe der Erfindung, diesen Nachteil zu überwinden und auch Lasten höherer Masse am Endeffektor des Robotermanipulators zu betreiben.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Verfahren zum Betreiben eines Robotermanipulators, aufweisend die Schritte:
- Ermitteln eines Kraftwinders oder Gelenkmomentenvektors auf Basis einer Gewichtskraft einer Masse und/oder auf Basis einer durch die Trägheit der Masse hervorgerufenen Kraft einer an einem Endeffektor des Robotermanipulators angeordneten Last,
- Ermitteln eines maximal zulässigen Arbeitsraumes und einer maximal zulässigen kinematischen Größe des Endeffektors oder wahlweise der Last jeweils auf Basis des Kraftwinders oder Gelenkmomentenvektors, wobei der maximal zulässige Arbeitsraum einen Bereich für zulässige Positionen des Endeffektors oder wahlweise der Last am Endeffektor angibt, sodass der Kraftwinder oder der Gelenkmomentenvektor innerhalb des Arbeitsraumes eine vorgegebene Metrik nicht übersteigt, und
- Ansteuern des Robotermanipulators durch eine Steuereinheit zum Ausführen einer vorgegebenen Aufgabe unter Berücksichtigung der maximal zulässigen kinematischen Größe und so, dass der Endeffektor oder wahlweise die Last am Endeffektor innerhalb des maximal zulässigen Arbeitsraums verbleibt, wenn zu Beginn der Ausführung der Aufgabe sich der Endeffektor oder wahlweise die Last am Endeffektor innerhalb des maximal zulässigen Arbeitsraums befindet.

Der Kraftwinder bzw. der Gelenkmomentenvektor wird jeweils auf Basis einer Gewichtskraft der Masse und/oder der durch die Trägheit der Masse hervorgerufenen Kraft der an dem Endeffektor des Robotermanipulators angeordneten Last ermittelt. Der Kraftwinder gibt insbesondere eine Kraft an, weiterhin bevorzugt zusätzlich oder alternativ bevorzugt nur ein Moment, insbesondere gegenüber einem erdfesten und bevorzugt kartesischen Koordinatensystem. Die Masse selbst erzeugt im Gravitationsfeld der Erde eine Gewichtskraft, die ein Moment auf die Gelenke des Robotermanipulators und auf die Basis des Robotermanipulators erzeugt. Im statischen Fall ist die Masse der Last nur für die Gewichtskraft verantwortlich. Im dynamischen Fall dagegen, das heißt wenn sich der Robotermanipulator bewegt, wirkt durch die Trägheit der Masse der Last am Endeffektor auch eine Trägheitskraft, insbesondere bei einer gleichförmigen Kreisbewegung des Robotermanipulators eine Zentrifugalkraft, bei Veränderung des resultierenden Trägheitsmoments der Last des Endeffektors eine Corioliskraft, und bei einer auf seiner Bahn beschleunigten Bewegung des Robotermanipulators die Kraft, die aus der Trägheit der Masse gegen die Beschleunigung resultiert. Der Gelenkmomentenvektor ist der mit dem Kraftwinder korrelierende Vektor aus den Gelenkmomenten.

Das Ermitteln des Kraftwinders kann neben der prädiktiven Ermittlung daher für alle statischen Fälle sehr einfach erfolgen, sobald die Masse der Last am Endeffektor bekannt ist. Denn dann ist auch die Gewichtskraft der Last bekannt. Die Ermittlung des Kraftwinders oder des Gelenkmomentenvektors aufgrund der Trägheit der Masse der Last am Endeffektor erfolgt dagegen insbesondere prädiktiv auf Basis der geplanten Aufgabe oder einer Gruppe von Aufgaben, wobei aus der jeweiligen Aufgabe insbesondere eine Trajektorie und daher auch die jeweilige Bahnkurve der Last am Endeffektor und die geplanten Beschleunigungen der Last am Endeffektor ableitbar sind.

Der Kraftwinder oder der Gelenkmomentenvektor, der ermittelt wird, muss daher nicht zwangsläufig real am Robotermanipulator vorliegen, sondern kann auch ein prädiktiv ermittelter hypothetischer Kraftwinder oder Gelenkmomentenvektor sein, der bei entsprechender Ausführung der Aufgabe oder bei entsprechender Anordnung der Last am Endeffektor des Robotermanipulators auftreten würde.

Die maximal zulässige kinematische Größe des Endeffektors oder wahlweise der Last am Endeffektor ist insbesondere eine Geschwindigkeit oder eine Beschleunigung des Endeffektors oder wahlweise der Last am Endeffektor. Ob der Endeffektor oder die Last am Endeffektor betrachtet wird, spielt für den Gedanken der Erfindung nur eine untergeordnete bis keine Rolle.

Der Arbeitsraum ist bevorzugt ein kugelförmiger Raum mit Kugelmittelpunkt innerhalb oder im Bereich der Basis des Robotermanipulators, alternativ bevorzugt ein quaderförmiger Raum. Weiterhin möglich sind Ellipsoide oder Teile davon. Weitere Formen sind möglich, je nachdem mit welchem Rechenverfahren und mit welcher Genauigkeit der Arbeitsraum ermittelt wird. So kann der Arbeitsraum auch nur näherungsweise ermittelt werden und eine vordefinierte endliche Anzahl von quaderförmigen oder kugelförmigen oder anderen Bereichen mit unterschiedlichen Volumina bereitgestellt werden, um aus dieser endlichen Anzahl die jeweils nächste passende Näherung auszuwählen.

Zumindest dann, wenn zu Beginn der Ausführung der Aufgabe sich der Endeffektor oder wahlweise die Last am Endeffektor innerhalb des maximal zulässigen Arbeitsraums befindet, ermittelt die mit dem Robotermanipulator verbundene Steuereinheit die vorgegebene Aufgabe so, dass der ermittelte maximal zulässige Arbeitsraum und die maximal zulässige kinematische Größe eingehalten werden. Dazu kann die Aufgabe jenseits dieser maximal zulässigen geometrischen und kinematischen Bereiche begrenzt werden, modifiziert werden, oder zumindest dem Anwender einen Hinweis darauf gegeben werden, wie die Aufgabe zu modifizieren wäre, sodass diese geometrischen oder kinematischen Bereiche nicht überschritten werden.

Befindet sich der Endeffektor oder wahlweise die Last am Endeffektor zu Beginn der Ausführung der Aufgabe nicht innerhalb des maximal zulässigen Arbeitsraums, so wird bevorzugt die Aufgabe überhaupt nicht ausgeführt, oder alternativ bevorzugt dazu auf die Signale der Steuereinheit hin der Robotermanipulator und insbesondere der Endeffektor oder wahlweise die Last am Endeffektor zurück in den geometrisch maximal zulässigen Arbeitsraum mit einer Geschwindigkeit und/oder einer Beschleunigung gefahren, die innerhalb der zulässigen jeweiligen kinematischen Größe liegt, und insbesondere anschließend die Ausführung der Aufgabe durch die Steuereinheit begonnen.

Die vorgegebene Metrik ist insbesondere ein Grenzwert für ein Moment, das auf die Basis, das heißt insbesondere den Sockel, des Robotermanipulators durch die Gewichtskraft der Last ausgeübt wird, wobei die vorgegebene Metrik aus dem Radius von einer durch die Basis des Robotermanipulators führenden vertikalen Achse zur Last hin multipliziert mit der Masse der Last angegeben werden kann. Ist die Masse der Last insbesondere konstant und bekannt, so kann die Metrik auch lediglich in einem Grenzwert bestehen, der mit diesem Radius verglichen wird.

Es ist eine vorteilhafte Wirkung der Erfindung, dass ein Robotermanipulator, der für den generellen Betrieb auf eine höchstzulässige Masse für eine Last am Endeffektor begrenzt ist, auch mit höheren Massen am Endeffektor betrieben werden kann.

Gemäß einer vorteilhaften Ausführungsform erfolgt das Ermitteln des maximal zulässigen Arbeitsraumes und der maximal zulässigen kinematischen Größe des Endeffektors oder wahlweise der Last des Endeffektors jeweils auf Basis einer Masseverteilung des Robotermanipulators und/oder eines Schwerpunkts des Robotermanipulators und/oder einer Masse des Endeffektors des Robotermanipulators und/oder eines Schwerpunkts des Endeffektors. Um das gesamte auf die Basis oder auch auf die Glieder oder auch die Gelenke des Robotermanipulators wirkende Moment zu bestimmen, ist die gesamte Masseverteilung des Robotermanipulators zusammen mit dem Endeffektor und der Masse der Last notwendig. Ob eine explizite Masseverteilung ermittelt wird oder die Masseverteilung in einzelnen Schwerpunkten der Elemente des Robotermanipulators oder in einem gesamten Schwerpunkt des Robotermanipulators mit einem zusammengefasst wird und mit einem entsprechenden Trägheitstensor betrachtet wird, spielt nur eine untergeordnete Rolle. Vorteilhaft wird es durch diese Ausführungsform ermöglicht, den maximal zulässigen Arbeitsraum und/oder die maximal zulässige kinematische Größe in Abhängigkeit von einem maximal vorgegebenen Moment auf ein entsprechendes Element des Robotermanipulators (Basis, Getriebe, Gelenk, Drehmomentsensor, Glied,...) zu ermitteln.

Gemäß einer weiteren vorteilhaften Ausführungsform wird die Gewichtskraft der Masse der Last durch statische oder dynamische Systemidentifikation ermittelt. In der statischen Systemidentifikation wird der Robotermanipulatoren in einer Ruhestellung belassen, und bevorzugt durch Momentensensoren insbesondere in den Gelenken des Robotermanipulators ein jeweiliges Gelenkmoment erfasst und daraus die Gewichtskraft und hieraus wiederum die Masse der Last ermittelt. Andere im Stand der Technik bekannten Kraft- und/oder Momentensensoren können verwendet werden, um die Gewichtskraft der Last zu erfassen und daraus die Masse der Last zu ermitteln. In der dynamischen Systemidentifikation wird insbesondere ein sinusförmiges Signal mit einer über die Zeit ansteigenden Frequenz als Eingangssignal für zumindest einen Aktuator des Robotermanipulators vorgegeben, und die Antwort des Robotermanipulators oder auch die vom Regler des Robotermanipulators erzeugte Stellgröße, insbesondere eine Stromstärke eines elektrischen Aktuators, erfasst. Im Falle der erfassten kinematischen Antwort des Robotermanipulators ergibt sich ein Spektrum des Eingangssignals und ein Spektrum des Ausgangssignals, die bei entsprechender Signalaufbereitung und Teilung der Spektren durcheinander einen Frequenzgang liefern, aus denen die Masse der Last des Endeffektors heraus gelesen werden kann, bzw. durch Optimierungsverfahren an ein Massemodell angenähert werden kann, indem Parameter des Massemodells insbesondere des Robotermanipulators einschließlich der Masse der Last zur Minimierung des Fehlers zwischen dem Massemodell und dem Frequenzgang einander angenähert werden. Vorteilhaft muss mittels dieser Ausführungsform nicht die Masse der Last vorgegeben werden und der Steuereinheit des Robotermanipulators mitgeteilt werden, sondern die Steuereinheit des Robotermanipulators ist mithilfe entsprechender Sensoren am Robotermanipulator selbst dazu in der Lage, die exakte Masse der Last am Endeffektor des Robotermanipulators zu ermitteln.

Gemäß einer weiteren vorteilhaften Ausführungsform erfolgt das Ansteuern des Robotermanipulators zum Ausführen der vorgegebenen Aufgabe unter Berücksichtigung des maximal zulässigen Arbeitsraumes durch Vorgeben von virtuellen Wänden an den Grenzen des maximal zulässigen Arbeitsraumes, wobei zum Erzeugen der virtuellen Wände der Robotermanipulator so angesteuert wird, dass er eine von den virtuellen Wänden weg gerichtete Kraft auf den Robotermanipulator beim manuellen Führen des Robotermanipulators ausübt. Die von den virtuellen Wänden weg gerichtete Kraft kann entweder graduell steigen sein, sodass der Anwender beim manuellen Führen des Robotermanipulators einen sanften Übergang in Richtung der jeweiligen virtuellen Wand über einen zunehmenden Widerstand des Robotermanipulators gegen das Führen des Robotermanipulators auf die virtuelle Wand verspürt, alternativ bevorzugt dazu ist die virtuelle Wand eine harte Grenze, sodass eine plötzliche Gegenkraft des Robotermanipulators an der virtuellen Wand auftritt, als würde der Anwender beim manuellen Führen des Robotermanipulators tatsächlich gegen eine physische Wand fahren. Vorteilhaft erlaubt diese Ausführungsform eine intuitive Unterstützung des manuellen Führens des Anwenders, sodass dieser intuitiv eine Rückmeldung darüber erhält, welche geometrischen Grenzen des Arbeitsraumes bereits definiert sind. Die virtuellen Wände können nicht nur im kartesischen erdfesten Koordinatensystem realisiert werden, sondern auch als künstliche Anschläge an einem jeweiligen Gelenk, sodass im letzteren Fall die Winkelbereiche eines jeweiligen Gelenks künstlich begrenzt werden.

Gemäß einer weiteren vorteilhaften Ausführungsform umfasst das Ansteuern des Robotermanipulators zum Ausführen der vorgegebenen Aufgabe unter Berücksichtigung des maximal zulässigen Arbeitsraumes und der maximal zulässigen kinematischen Größe das Ansteuern von Bremsen des Robotermanipulators, wobei die Bremsen des Robotermanipulators ausgehend von einem geschlossenen Zustand nur dann geöffnet werden, wenn sich der Endeffektor oder wahlweise die Last am Endeffektor zu Beginn der Ausführung der Aufgabe innerhalb des zulässigen Arbeitsraumes befindet. Wird beispielsweise vom Anwender an den Endeffektor eine Last mit einer nominal unzulässigen Masse angeordnet, so können insbesondere zum Schutz von Getrieben an den Gelenken des Robotermanipulators die Bremsen geschlossen bleiben, wenn die Masse der Last alleine durch ihre Gewichtskraft beispielsweise die Getriebe des Robotermanipulators unzulässig schädigen würde. Vorteilhaft erhöht dies die Lebensdauer des Robotermanipulators und insbesondere der Getriebe des Robotermanipulators, bzw. verhindert vorteilhaft die vorzeitige Verkürzung der Lebensdauer des Robotermanipulators.

Gemäß einer weiteren vorteilhaften Ausführungsform erfolgt das Ermitteln des maximal zulässigen Arbeitsraumes und der maximal zulässigen kinematischen Größe auf Basis einer durch die vorgegebene Aufgabe vordefinierten Trajektorie des Robotermanipulators und auf Basis des über die Trajektorie auftretenden Trägheitstensors des Robotermanipulators und/oder des Endeffektors und/oder der Last, indem aus der vordefinierten Trajektorie eine zeitabhängige Beschleunigung des Robotermanipulators und/oder des Endeffektors und/oder der Last ermittelt wird und indem aus der von der vordefinierten Trajektorie abhängigen zeitabhängigen Pose des Robotermanipulators der zeitabhängige Trägheitstensor des Robotermanipulators und/oder des Endeffektors und/oder der Last ermittelt werden. Die Trajektorie des Robotermanipulators weist insbesondere die Information einer Bahnkurve und weiterhin bevorzugt zusätzlich eine zur Bahnkurve zugeordnete Zeitinformation auf, sodass im Begriff der Trajektorie des Robotermanipulators bevorzugt nicht nur die geometrische Bahn des Endeffektors bzw. der Last inbegriffen sind, sondern auch die jeweiligen beim Abfahren der Bahnkurve auftretenden Geschwindigkeiten und/oder Beschleunigungen. Somit sind ausreichend viele kinematische Informationen vorhanden, um auf ein dynamisches Moment, verursacht durch die Trägheit der Masse der Last, zu ermitteln und beim Betreiben des Robotermanipulators und insbesondere beim Ausführen der vorgegebenen Ausgabe nicht nur die Gewichtskraft der Masse der Lasten zu berücksichtigen, sondern auch die dynamischen Kräfte, die zu einem Moment auf die Glieder, Gelenke und auf die Basis des Robotermanipulators führen.

Gemäß einer weiteren vorteilhaften Ausführungsform weist das Verfahren weiterhin die Schritte auf:
- Prüfen der vorgegebenen Aufgabe auf Verlassen des maximal zulässigen Arbeitsraumes durch den Endeffektor oder wahlweise durch die Last und/oder auf Überschreiten der maximal zulässigen kinematischen Größe des Endeffektors oder wahlweise der Last, und
- Ausgeben eines Hinweises an einen Anwender an einer Ausgabeeinheit, wie die Aufgabe geändert werden kann, damit beim Ausführen der Aufgabe der maximal zulässige Arbeitsraum durch den Endeffektor oder wahlweise durch die Last nicht verlassen wird und/oder die maximal zulässige kinematische Größe des Endeffektors oder wahlweise der Last nicht überschritten wird.

Die Ausgabeeinheit ist bevorzugt ein Bildschirm, auf dem bevorzugt über Pfeile dem Anwender visualisiert wird, wie die Aufgabe geändert werden könnte, sodass der maximal zulässige Arbeitsraum und die maximal zulässige kinematische Größen beim Ausführen der Aufgabe nicht überschritten werden. Vorteilhaft erhält der Anwender somit eine intuitive Rückmeldung darüber, wie die Aufgabe zu ändern wäre, sodass insbesondere die Lebensdauer des Robotermanipulators beim Ausführen der Aufgabe mit einer über die nominal zulässige Masse hinausgehenden Last nicht unnötig herabgesetzt wird, bzw. der sichere Betrieb des Robotermanipulators weiterhin gewährleistet ist.

Gemäß einer weiteren vorteilhaften Ausführungsform erfolgt das Ermitteln des maximal zulässigen Arbeitsraumes und der maximal zulässigen kinematischen Größe durch einen Suchalgorithmus der nichtlinearen Optimierung. Ist eine analytische Lösung zum Ermitteln des maximal zulässigen Arbeitsraums und/oder der maximal zulässigen kinematischen Größe möglich, so bieten sich vorteilhaft Methoden der nichtlinearen Optimierung an, um einen entsprechende Einschränkung zu finden. Die Methoden der nichtlinearen Optimierung sind insbesondere systematische Suchalgorithmen, wie gradientenbasierte Methoden, Methoden der quadratischen Optimierung, genetische und Evolutionsalgorithmen, sowie Mischformen aus den genannten. Restriktionen der nichtlinearen Optimierung sind dann insbesondere durch die Einhaltung der vorgegeben Metrik sowie der Einhaltung der zulässigen kinematischen Größe gegeben.

Gemäß einer weiteren vorteilhaften Ausführungsform ist ein Startpunkt des Suchalgorithmus diejenige Winkelstellung des von dem distalen Glied des Robotermanipulators gezählt zweiten Gelenks, an der der Schwerkrafteinfluss auf das Moment am zweiten Gelenk maximal ist. Insbesondere ist diese Winkelstellung durch Kenntnis der mechanischen Situation am Robotermanipulator vom Fachmann aus aus dem Stegreif bestimmbar. Insbesondere unter Festhalten des von dem distalen Glied des Robotermanipulators gezählt dritten Gelenks wird dann bevorzugt das zweite Gelenk pertubiert, bevorzugt innerhalb eines Kegels mit vertikaler Rotationssymmetrieachse, um eine Reduktion der Belastung auf das zweite Gelenk zu erhalten.

Ein weiterer Aspekt der Erfindung betrifft ein Robotersystem aufweisend einen Robotermanipulator mit einem Endeffektor und eine Steuereinheit, wobei die Steuereinheit zum Ermitteln eines Kraftwinders oder Gelenkmomentenvektors auf Basis einer Gewichtskraft einer Masse und/oder auf Basis einer durch die Trägheit der Masse hervorgerufenen Kraft einer an einem Endeffektor des Robotermanipulators angeordneten Last ausgeführt ist, und zum Ermitteln eines maximal zulässigen Arbeitsraumes und/oder einer maximal zulässigen kinematischen Größe des Endeffektors oder wahlweise der Last jeweils auf Basis des Kraftwinders oder Gelenkmomentenvektors ausgeführt ist, wobei der maximal zulässige Arbeitsraum einen Bereich für zulässige Positionen der Last am Endeffektor oder des Endeffektors angibt, sodass der Kraftwinder oder der Gelenkmomentenvektor innerhalb des Arbeitsraumes eine vorgegebene Metrik nicht übersteigt, und zum Ansteuern des Robotermanipulators durch eine Steuereinheit zum Ausführen einer vorgegebenen Aufgabe unter Berücksichtigung der maximal zulässigen kinematischen Größe ausgeführt ist und zum Ausführen der vorgegebenen Aufgabe so, dass der Endeffektor oder wahlweise die Last am Endeffektor innerhalb des maximal zulässigen Arbeitsraums verbleibt, wenn zu Beginn der Ausführung der Aufgabe sich der Endeffektor oder wahlweise die Last am Endeffektor innerhalb des maximal zulässigen Arbeitsraums befindet.

Vorteile und bevorzugte Weiterbildungen des vorgeschlagenen Robotersystems ergeben sich durch eine analoge und sinngemäße Übertragung der im Zusammenhang mit dem vorgeschlagenen Verfahren vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: ein Verfahren gemäß einem Ausführungsbeispiel der Erfindung, und
- Fig. 2: ein Robotersystem gemäß einem weiteren Ausführungsbeispiel der Erfindung.

Die Darstellungen in den Figuren sind schematisch und nicht maßstäblich.

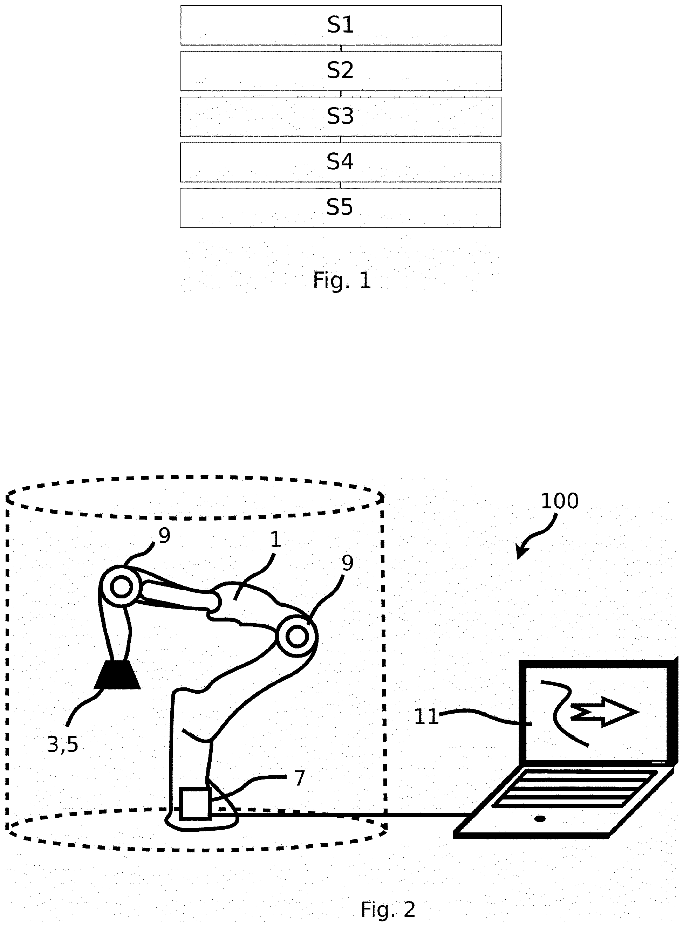

Fig. 1 zeigt ein Verfahren zum Betreiben eines Robotermanipulators 1. Das Verfahren der Fig. 1 wird auf einem Robotersystem 100, wie in der Fig. 2 beschrieben, ausgeführt.

Daher können in der folgenden Beschreibung auch die Erklärungen zur Fig. 2 herangezogen werden. Das Verfahren weist hierbei die folgenden Schritte auf:
- Ermitteln S1 eines Kraftwinders oder Gelenkmomentenvektors auf Basis einer Gewichtskraft einer Masse und einer durch die Trägheit der Masse hervorgerufenen Kraft einer an einem Endeffektor 3 des Robotermanipulators 1 angeordneten Last 5. Die Gewichtskraft der Masse der Last 5 wird durch statische Systemidentifikation ermittelt. Das heißt, dass nach dem Anordnen der Last 5 durch einen Anwender an den Endeffektor 3 die in den Gelenken des Robotermanipulators 1 angeordneten Momentensensoren ein Moment erfassen und aus der bekannten Masseverteilung des Robotermanipulators 1 und des Endeffektors 3 die Masse der Last 5 über die aktuellen Gelenkwinkel des Robotermanipulators 1 erhalten wird. Die durch die Trägheit der Masse hervorgerufene Kraft der an dem Endeffektor 3 des Robotermanipulators 1 angeordneten Last 5 wird dagegen prädiktiv ermittelt, indem die vorgegebene Aufgabe analysiert wird und eine Trajektorie für den Endeffektor 3 bzw. für die Last 5 ermittelt wird.
- Ermitteln S2 eines maximal zulässigen Arbeitsraumes und einer maximal zulässigen kinematischen Größe des Endeffektors 3 jeweils auf Basis des Kraftwinders oder Gelenkmomentenvektors, wobei der maximal zulässige Arbeitsraum einen Bereich für zulässige Positionen des Endeffektors 3 angibt, sodass der Kraftwinder oder der Gelenkmomentenvektor innerhalb des Arbeitsraumes einen vorgegebenen Grenzwert nicht übersteigt. Das Ermitteln des maximal zulässigen Arbeitsraumes und der maximal zulässigen kinematischen Größe des Endeffektors 3 erfolgen jeweils auf Basis einer Masseverteilung des Robotermanipulators 1 und einer Masseverteilung des Endeffektors 3 und auf Basis einer Masse und eines Trägheitstensors der Last 5. Durch die vollständig bekannten Masseverteilung aller Elemente des Robotermanipulators 1 einschließlich der Last 5 ist durch das Integral aller Massenelemente über die Radien ein Moment auf die Basis des Robotermanipulators 1 bekannt. Durch ein gradientenbasiertes Suchverfahren wird nun der maximal zulässige Arbeitsraum und die maximal zulässige Geschwindigkeit und Beschleunigung des Endeffektors 3 erzeugt. Im gradientenbasierten Verfahren werden um einen Ausgangspunkt mit gewissem Abstand weitere Suchpunkte in der Zielfunktion zur Einhaltung der vorgegebenen Metrik, nämlich dem Grenzwert im Moment auf die Basis des Robotermanipulators 1, ermittelt. Aus diesen Suchpunkten wird ein Gradient ermittelt und mit einer vorgegebenen Länge der Gradient multipliziert, um den nächsten Schritt erhalten. Dieses Verfahren wird iterativ wiederholt, bis der Algorithmus konvergiert hat und der Betrag des Gradients einen gewissen Schwellwert unterschritten hat. Aus dieser Berechnung ergibt sich ein zylinderförmiger Bereich zur Begrenzung des maximal zulässigen Arbeitsraums. Ferner wird die maximal zulässige Geschwindigkeit und Beschleunigung des Endeffektors 3 auf Basis einer durch die vorgegebene Aufgabe vordefinierten Trajektorie des Robotermanipulators 1 und auf Basis des über die Trajektorie auftretenden Trägheitstensors des Robotermanipulators 1 und des Endeffektors 3 und der Last 5 ermittelt. Dies erfolgt unter Berücksichtigung des bereits ermittelten maximal zulässigen Arbeitsraumes. Die vordefinierten Trajektorie liefert eine zeitabhängige Beschleunigung des Robotermanipulators 1 und des Endeffektors 3 und der Last 5. Aus der von der vordefinierten Trajektorie abhängigen zeitabhängigen Pose des Robotermanipulators 1 der zeitabhängige Trägheitstensor des Robotermanipulators 1 und des Endeffektors 3 und der Last 5 sind dann alle Trägheitsmomente und Beschleunigungen bekannt.
- Prüfen S3 der vorgegebenen Aufgabe auf Verlassen des maximal zulässigen Arbeitsraumes durch den Endeffektor 3 und auf Überschreiten der maximal zulässigen kinematischen Größe des Endeffektors 3.
- Ausgeben S4 eines visuellen Hinweises in Form eine Pfeiles an einen Anwender an einem Bildschirm 11 eines mit der Steuereinheit 7 verbundenen Anwenderrechners, wie die Aufgabe vom Anwender geändert werden kann, damit beim Ausführen der Aufgabe der maximal zulässige Arbeitsraum durch den Endeffektor 3 nicht verlassen wird und/oder die maximal zulässige kinematische Größe des Endeffektors 3 nicht überschritten wird.
- Ansteuern S5 des Robotermanipulators 1 durch eine Steuereinheit 7 zum Ausführen einer vorgegebenen Aufgabe unter Berücksichtigung der maximal zulässigen kinematischen Größe und so, dass der Endeffektor 3 oder wahlweise die Last 5 am Endeffektor 3 innerhalb des maximal zulässigen Arbeitsraums verbleibt, wenn zu Beginn der Ausführung der Aufgabe sich der Endeffektor 3 oder wahlweise die Last 5 am Endeffektor 3 innerhalb des maximal zulässigen Arbeitsraums befindet. Der ermittelte zylinderförmige Arbeitsraum dient zur Grundlage zur Erzeugung von virtuellen Wänden an der Mantelfläche des Zylinders. Das Ansteuern des Robotermanipulators 1 zum Ausführen der vorgegebenen Aufgabe erfolgt dabei so, dass zum Erzeugen der virtuellen Wände der Robotermanipulators 1 eine von den virtuellen Wand weg gerichtete Kraft auf den Robotermanipulator 1 beim manuellen Führen des Robotermanipulators 1 ausübt. Befindet sich zu Beginn der Ausführung der Aufgabe die Last 5 außerhalb der Mantelfläche des zylinderförmigen Arbeitsraumes, so werden die Bremsen 9 des Robotermanipulators erst gar nicht gelöst. Dafür wird ein Hinweis auf dem Bildschirm 11 dem Anwender angezeigt, dass sich die Last 5 außerhalb des zulässigen Arbeitsraumes befindet.

Fig. 2 zeigt ein Robotersystem 100. Das Robotersystem 100 ist insbesondere dazu ausgeführt, das Verfahren der Fig. 1 auszuführen und weist einen Robotermanipulator 1 mit einem Endeffektor 3 und eine Steuereinheit 7 auf, wobei die Steuereinheit 7 zum Ermitteln eines Kraftwinders oder Gelenkmomentenvektors auf Basis einer Gewichtskraft einer Masse und/oder einer durch die Trägheit der Masse hervorgerufenen Kraft einer an einem Endeffektor 3 des Robotermanipulators 1 angeordneten Last 5 ausgeführt ist, und zum Ermitteln eines maximal zulässigen Arbeitsraumes und/oder einer maximal zulässigen kinematischen Größe des Endeffektors 3 oder wahlweise der Last 5 jeweils auf Basis des Kraftwinders oder Gelenkmomentenvektors ausgeführt ist, wobei der maximal zulässige Arbeitsraum einen Bereich für zulässige Positionen der Last 5 am Endeffektor 3 oder des Endeffektors 3 angibt, sodass der Kraftwinder oder der Gelenkmomentenvektor innerhalb des Arbeitsraumes eine vorgegebene Metrik nicht übersteigt, und zum Ansteuern des Robotermanipulators 1 durch eine Steuereinheit 7 zum Ausführen einer vorgegebenen Aufgabe unter Berücksichtigung der maximal zulässigen kinematischen Größe ausgeführt ist und zum Ausführen der vorgegebenen Aufgabe so, dass der Endeffektor 3 oder wahlweise die Last 5 am Endeffektor 3 innerhalb des maximal zulässigen Arbeitsraums verbleibt, wenn zu Beginn der Ausführung der Aufgabe sich der Endeffektor 3 oder wahlweise die Last 5 am Endeffektor 3 innerhalb des maximal zulässigen Arbeitsraums befindet.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

### Bezugszeichenliste

- 1: Robotermanipulator
- 3: Endeffektor
- 5: Last
- 7: Steuereinheit
- 9: Bremsen
- 11: Ausgabeeinheit
- 100: Robotersystem

- S1: Ermitteln
- S2: Ermitteln
- S3: Prüfen
- S4: Ausgeben
- S5: Ansteuern

## Patentansprüche

1. Verfahren zum Betreiben eines Robotermanipulators (1), aufweisend die Schritte:
- Ermitteln (S1) eines Kraftwinders oder Gelenkmomentenvektors auf Basis einer Gewichtskraft einer Masse und/oder auf Basis einer durch die Trägheit der Masse hervorgerufenen Kraft einer an einem Endeffektor (3) des Robotermanipulators (1) angeordneten Last (5),
- Ermitteln (S2) eines maximal zulässigen Arbeitsraumes und einer maximal zulässigen kinematischen Größe des Endeffektors (3) oder wahlweise der Last (5) jeweils auf Basis des Kraftwinders oder Gelenkmomentenvektors, wobei der maximal zulässige Arbeitsraum einen Bereich für zulässige Positionen des Endeffektors (3) oder wahlweise der Last (5) angibt, sodass der Kraftwinder oder der Gelenkmomentenvektor innerhalb des Arbeitsraumes eine vorgegebene Metrik nicht übersteigt, und
- Ansteuern (S5) des Robotermanipulators (1) durch eine Steuereinheit (7) zum Ausführen einer vorgegebenen Aufgabe unter Berücksichtigung der maximal zulässigen kinematischen Größe und so, dass der Endeffektor (3) oder wahlweise die Last (5) am Endeffektor (3) innerhalb des maximal zulässigen Arbeitsraums verbleibt, wenn zu Beginn der Ausführung der Aufgabe sich der Endeffektor (3) oder wahlweise die Last (5) am Endeffektor (3) innerhalb des maximal zulässigen Arbeitsraums befindet.

2. Verfahren nach Anspruch 1,
wobei das Ermitteln des maximal zulässigen Arbeitsraumes und der maximal zulässigen kinematischen Größe des Endeffektors (3) oder wahlweise der Last (5) des Endeffektors (3) jeweils auf Basis einer Masseverteilung des Robotermanipulators (1) und/oder eines Schwerpunkts des Robotermanipulators (1) und/oder einer Masse des Endeffektors (3) des Robotermanipulators (1) und/oder eines Schwerpunkts des Endeffektors (3) erfolgt.

3. Verfahren nach einem der vorhergehenden Ansprüche,
wobei die Gewichtskraft der Masse der Last (5) durch statische oder dynamische Systemidentifikation ermittelt wird.

4. Verfahren nach einem der vorhergehenden Ansprüche,
wobei das Ansteuern des Robotermanipulators (1) zum Ausführen der vorgegebenen Aufgabe unter Berücksichtigung des maximal zulässigen Arbeitsraumes durch Vorgeben von virtuellen Wänden an den Grenzen des maximal zulässigen Arbeitsraumes erfolgt, wobei zum Erzeugen der virtuellen Wände der Robotermanipulators (1) so angesteuert wird, dass er eine von den virtuellen Wänden weg gerichtete Kraft auf den Robotermanipulator (1) beim manuellen Führen des Robotermanipulators (1) ausübt.

5. Verfahren nach einem der vorhergehenden Ansprüche,
wobei das Ansteuern des Robotermanipulators (1) zum Ausführen der vorgegebenen Aufgabe unter Berücksichtigung des maximal zulässigen Arbeitsraumes und der maximal zulässigen kinematischen Größe das Ansteuern von Bremsen (9) des Robotermanipulators (1) umfasst, wobei die Bremsen (9) des Robotermanipulators (1) ausgehend von einem geschlossenen Zustand nur dann geöffnet werden, wenn sich der Endeffektor (3) oder wahlweise die Last (5) am Endeffektor (3) zu Beginn der Ausführung der Aufgabe innerhalb des zulässigen Arbeitsraumes befindet.

6. Verfahren nach einem der vorhergehenden Ansprüche,
wobei das Ermitteln des maximal zulässigen Arbeitsraumes und der maximal zulässigen kinematischen Größe auf Basis einer durch die vorgegebene Aufgabe vordefinierten Trajektorie des Robotermanipulators (1) und auf Basis des über die Trajektorie auftretenden Trägheitstensors des Robotermanipulators (1) und/oder des Endeffektors (3) und/oder der Last (5) erfolgt, indem aus der vordefinierten Trajektorie eine zeitabhängige Beschleunigung des Robotermanipulators (1) und/oder des Endeffektors (3) und/oder der Last (5) ermittelt wird und indem aus der von der vordefinierten Trajektorie abhängigen zeitabhängigen Pose des Robotermanipulators (1) der zeitabhängige Trägheitstensor des Robotermanipulators (1) und/oder des Endeffektors (3) und/oder der Last (5) ermittelt werden.

7. Verfahren nach einem der vorhergehenden Ansprüche,
weiterhin aufweisend die Schritte:
- Prüfen (S3) der vorgegebenen Aufgabe auf Verlassen des maximal zulässigen Arbeitsraumes durch den Endeffektor (3) oder wahlweise durch die Last (5) und/oder auf Überschreiten der maximal zulässigen kinematischen Größe des Endeffektors (3) oder wahlweise der Last (5), und
- Ausgeben (S4) eines Hinweises an einen Anwender an einer Ausgabeeinheit (11), wie die Aufgabe geändert werden kann, damit beim Ausführen der Aufgabe der maximal zulässige Arbeitsraum durch den Endeffektor (3) oder wahlweise durch die Last (5) nicht verlassen wird und/oder die maximal zulässige kinematische Größe des Endeffektors (3) oder wahlweise der Last (5) nicht überschritten wird.

8. Verfahren nach einem der vorhergehenden Ansprüche,
wobei das Ermitteln des maximal zulässigen Arbeitsraumes und der maximal zulässigen kinematischen Größe durch einen Suchalgorithmus der nichtlinearen Optimierung erfolgt.

9. Verfahren nach Anspruch 8,
wobei ein Startpunkt des Suchalgorithmus diejenige Winkelstellung des von dem distalen Glied des Robotermanipulators (1) gezählt zweiten Gelenks ist, an der der Schwerkrafteinfluss auf das Moment am zweiten Gelenk maximal ist.

10. Robotersystem (100) aufweisend einen Robotermanipulator (1) mit einem Endeffektor (3) und eine Steuereinheit (7), wobei das Robotersystem (100) dazu ausgeführt ist, das Verfahren nach Anspruch 1 auszuführen.

## Claims

1. A method for operating a robot manipulator (1), having the following steps:
- ascertaining (S1) a wrench or joint torque vector on the basis of a weight force of a mass and/or on the basis of a force induced by the inertia of the mass of a load (5) on an end effector (3) of the robot manipulator (1),
- ascertaining (S2) a maximum permissible workspace and a maximum permissible kinematic variable of the end effector (3) or optionally the load (5), in each case on the basis of the wrench or joint torque vector, wherein the maximum permissible workspace specifies a range for permissible positions of the end effector (3) or optionally the load (5), such that the wrench or the joint torque vector does not exceed a predetermined metric within the workspace, and
- controlling (S5) the robot manipulator (1) by way of a control unit (7) for executing a predetermined task in consideration of the maximum permissible kinematic variable and such that the end effector (3) or optionally the load (5) on the end effector (3) remains within the maximum permissible workspace if, at the beginning of the execution of the task, the end effector (3) or optionally the load (5) on the end effector (3) is located within the maximum permissible workspace.

2. The method as claimed in claim 1,
wherein the ascertaining of the maximum permissible workspace and the maximum permissible kinematic variable of the end effector (3) or optionally the load (5) of the end effector (3) is implemented on the basis of a mass distribution of the robot manipulator (1) and/or a center of gravity of the robot manipulator (1) and/or a mass of the end effector (3) of the robot manipulator (1) and/or a center of gravity of the end effector (3), respectively.

3. The method as claimed in any one of the preceding claims,
wherein the weight force of the mass of the load (5) is ascertained by static or dynamic system identification.

4. The method as claimed in any one of the preceding claims,
wherein the controlling of the robot manipulator (1) is implemented for executing the predetermined task in consideration of the maximum permissible work by predetermining virtual walls at the limits of the maximum permissible workspace, wherein for generating the virtual walls, the robot manipulator (1) is controlled such that it exerts a force directed away from the virtual walls on the robot manipulator (1) during the manual guiding of the robot manipulator (1).

5. The method as claimed in any one of the preceding claims,
wherein the controlling of the robot manipulator (1) for executing the predetermined task in consideration of the maximum permissible workspace and the maximum permissible kinematic variable comprises the controlling of brakes (9) of the robot manipulator (1), wherein the brakes (9) of the robot manipulator (1) are only opened starting from a closed state when the end effector (3) or optionally the load (5) on the end effector (3) is located within the permissible workspace at the beginning of the execution of the task.

6. The method as claimed in any one of the preceding claims,
wherein the ascertaining of the maximum permissible workspace and the maximum permissible kinematic variable is implemented on the basis of a trajectory of the robot manipulator (1) predefined by the predetermined task and on the basis of the inertial tensor of the robot manipulator (1) and/or the end effector (3) and/or the load (5) occurring over the trajectory, in that a time-dependent acceleration of the robot manipulator (1) and/or the end effector (3) and/or the load (5) is ascertained from the predefined trajectory and in that the time-dependent inertial tensor of the robot manipulator (1) and/or the end effector (3) and/or the load (5) is ascertained from the time-dependent pose of the robot manipulator (1) dependent on the predefined trajectory.

7. The method as claimed in any one of the preceding claims,
furthermore having the following steps:
- checking (S3) the predetermined task for leaving the maximum permissible workspace by the end effector (3) or optionally by the load (5) and/or for exceeding the maximum permissible kinematic variable of the end effector (3) or optionally the load (5), and
- outputting (S4) an instruction to a user at an output unit (11) of how the task can be changed so that during the executing of the task the maximum permissible workspace is not left by the end effector (3) or optionally by the load (5) and/or the maximum permissible kinematic variable of the end effector (3) or optionally the load (5) is not exceeded.

8. The method as claimed in any one of the preceding claims,
wherein the ascertaining of the maximum permissible workspace and the maximum permissible kinematic variable is implemented by a search algorithm of nonlinear optimization.

9. The method as claimed in claim 8,
wherein a starting point of the search algorithm is that angle position of the second joint counted from the distal limb of the robot manipulator (1) at which the influence of gravity on the torque at the second joint is maximal.

10. A robot system (100) having a robot manipulator (1) having an end effector (3) and a control unit (7), wherein the robot system (100) is configured to execute the method according to claim 1.

## Revendications

1. Méthode d'exploitation d'un manipulateur de robot (1), comprenant les étapes:
- déterminer (S1) un enrouleur de force ou d'un vecteur de moment d'articulation sur la base d'une masse et/ou sur la base d'une force provoquée par de l'inertie de masse d'une charge (5) disposée sur un effecteur d'extrémité (3) du manipulateur de robot (1),
- déterminer (S2) un espace de travail maximalement admissible et d'une valeur cinématique maximalement admissible
de l'effecteur d'extrémité (3) ou, facultativement, de la charge (5), respectivement sur la base de l' enrouleur de force ou du vecteur de moment d'articulation, où l'espace de travail maximalement admissible indique une plage de positions admissibles de l'effecteur d'extrémité (3) ou, facultativement, de la charge (5), de sorte que l'enrouleur de force ou le vecteur de moment d'articulation à l'intérieur de l'espace de travail ne dépasse pas une métrique prédéterminée, et
- commander (S5) le manipulateur de robot (1) par une unité de commande (7) pour exécuter une tâche prédéterminée en tenant compte de la valeur cinématique maximale admissible et de telle sorte que l'effecteur d'extrémité (3) ou, facultativement, la charge (5) sur l'effecteur d'extrémité (3) reste à l'intérieur de l'espace de travail maximalement admissible
si, au début de l'exécution de la tâche, l'effecteur d'extrémité (3)
ou, facultativement, la charge (5) sur l'effecteur final (3) se trouve à l'intérieur de l'espace de travail maximalement admissible.

2. Méthode selon la revendication 1,
où déterminer l'espace de travail maximalement admissible et de la valeur maximale de la force d'inertie est effectuée respectivement sur la base d'une répartition de masse du manipulateur de robot (1) et/ou d'un centre de gravité du manipulateur de robot (1) et/ou d'une masse de l'effecteur d'extrémité (3) du manipulateur de robot (1) et/ou d'un centre de gravité de l'effecteur d'extrémité (3).

3. Méthode selon l'une des revendications précédentes,
où le force de poids de la masse de la charge (5) est déterminé par analyse statique ou dynamique du système.

4. Méthode selon l'une des revendications précédentes, où commander le manipulateur de robot (1) pour l'exécution de la tâche prédéfinie s'effectue en tenant compte de l'espace de travail maximalement admissible en prédéfinissant des parois virtuelles aux limites de l'espace de travail maximalement admissible, où, pour générer les parois virtuelles, le manipulateur de robot (1) est commandé de telle sorte qu'il exerce une force orientée à l'opposé des parois virtuelles sur le manipulateur de robot (1) lors d'un guidage manuel du manipulateur de robot (1).

5. Procédé selon l'une des revendications précédentes, où commander le manipulateur de robot (1) pour l'exécution de la tâche prédéfinie comprend, en tenant compte de l'espace de travail maximalement admissible et de la valeur cinématique maximale admissible, la commande des freins (9) du manipulateur de robot (1), où les freins (9) du manipulateur de robot (1) ne sont ouverts, à partir d'un état fermé, que lorsque l'effecteur d'extrémité (3) ou, au choix, la charge (5) sur l'effecteur d'extrémité (3) se trouve dans l'espace de travail admissible au début de l'exécution de la tâche.

6. Méthode selon l'une des revendications précédentes,
où la détermination de l'espace de travail maximalement admissible et de la valeur de mouvement maximalement admissible est effectuée sur la base d'une trajectoire prédéfinie du manipulateur de robot (1) par la tâche prédéfinie et sur la base du tenseur d'inertie du manipulateur de robot (1) apparaissant sur la trajectoire et/ou de l'effecteur d'extrémité (3) et/ou de la charge (5), en déterminant, à partir de la trajectoire prédéfinie, une accélération dépendant du temps du manipulateur de robot (1) et/ou de l'effecteur d'extrémité (3) et/ou de la charge (5), et en déterminant, à partir de la pose dépendant du temps du manipulateur de robot (1) dépendant de la trajectoire prédéfinie, le tenseur d'inertie dépendant du temps du manipulateur de robot (1) et/ou de l'effecteur d'extrémité (3) et/ou de la charge (5).

7. Méthode selon l'une des revendications précédentes,
comprenant en outre les étapes suivantes :
- vérifier (S3) la tâche prédéfinie de une sortie de l'espace de travail maximalement admissible par l'effecteur d'extrémité (3) ou, facultativement, par la charge (5), et
- sortir (S4) à un utilisateur, à une unité de sortie (11), une indication comment la tâche peut être modifiée afin que, lors de l'exécution de la tâche, l'espace de travail maximalement autorisé n'est pas dépassé par l'effecteur d'extrémité (3) ou, facultativement, par la charge (5) et/ou que la valeur cinématique maximalement autorisée de l'effecteur d'extrémité (3) ou, facultativement, de la charge (5) n'est pas dépassée.

8. Méthode selon l'une des revendications précédentes,
où la détermination de l'espace de travail maximalement admissible et de la valeur maximalement admissible s'effectue au moyen d'un algorithme de recherche d'optimisation non linéaire.

9. Méthode selon la revendication 8,
où un point de départ de l'algorithme de recherche est la position angulaire de la deuxième articulation comptée à partir de l'élément distal du manipulateur de robot (1), à laquelle l'influence de la gravité sur le moment au niveau de la deuxième articulation est maximale.

10. Système robotique (100) comprenant un manipulateur robotique (1) avec un effecteur d'extrémité (3) et une unité de commande (7), où le système robotique (100) est configuré pour exécuter la méthode selon la revendication 1.
